# EUROPEAN PATENT SPECIFICATION

(11) **EP 1 510 417 B1**
(45) Date of publication and mention of the grant of the patent: **29.11.2006**
(21) Application number: 04020296.2
(22) Date of filing: 26.08.2004
(51) Int. Cl.: B60R 21/20

(54) **Airbag module**
Airbag-Modul
Module de sac gonflable

(30) Priority: 27.08.2003 US 649481
(43) Date of publication of application: 02.03.2005
(73) Proprietor: AUTOLIV ASP, INC., Ogden, Utah 84405 (US)
(72) Inventor: De Pottey, Tim, Flint, Michigan 48506 (US); Olar, Sam, Sterling Heights, MI 48310 (US); Zimmerman, Mike, Waterford, MI 48329 (US); Soriano, Ricardo, 46023 Valencia (ES); Coloma, Ernesto, 46015 Valencia (ES); Monleon, Juan, 46020 Valencia (ES); Vales, Manuel, 46004 Valencia (ES)
(74) Representative: Parry, Simon James

(56) References cited:
- EP-A- 0 364 267
- DE-U- 20 303 303
- DE-U- 20 307 791
- US-A- 5 427 406

## Description

The present invention relates to systems and methods for protecting vehicle occupants from injury. More specifically, the present invention relates to an airbag module incorporating an inflator mounting arrangement that simplifies the assembly of the airbag module.

The inclusion of inflatable safety restraint devices, or airbags, is now a legal requirement for many new vehicles. Airbags are typically installed in the steering wheel and in the dashboard on the passenger side of a car. Additionally, airbags may be installed to inflate beside the passenger to provide side impact protection, in front of the knees to protect the knees from impact, or at other strategic locations.

In the event of an accident, a sensor system within the vehicle senses an impact situation and triggers the ignition of an inflator. Inflation gases from the inflator fill the airbag cushions, which immediately inflate to protect the driver and/or passengers from impact against the interior surfaces of the vehicle. During normal vehicle operation, airbags are typically stowed behind covers to protect them from tampering and provide a more attractive interior facade for the vehicle.

Typically, the inflator is securely mounted within the vehicle in such a manner that the exiting gases enter the cushion, either directly or through a conduit called a "gas guide." Many types of inflators are subject to strong thrust forces from the exiting inflation gas and must be securely attached to the mounting device. As a result, an inflator is typically mounted through the use of various pieces hardware such as brackets, mechanical fasteners, and/or other retention devices.

Unfortunately, the assembly of an inflator and a mounting device, according to these methods, increases the total number of manufacturing steps in assembling an airbag module. Often, an installer must perform a number of actions such as picking up fasteners, gripping the structure to which the inflator is to be attached, aligning the inflator with the structure, aligning the fasteners with the inflator, and applying the fasteners. In the case of threaded fasteners such as bolts, the fasteners must be rotated into place. Consequently, multiple steps must be performed and automation is more difficult to use. These additional manufacturing steps increase the costs of manufacturing an airbag module.

Furthermore, the necessary mounting hardware adds to the part count of the airbag module, thereby adding significantly to the overall module cost. Additionally, each part and/or manufacturing step adds an additional point of failure that may decrease the reliability of the airbag module and increase incidence of repair and/or reworking. Furthermore, some inflator attachment schemes are limited to only one specific inflator type, and thus cannot be used for multiple airbag module configurations. Thus, additional production capacity, inventory, and the like must be maintained to provide for the attachment of multiple inflator types.

EP0364267 as the closest prior art discloses an airbag arrangement for use as a safety device in a motor vehicle in which a single piece of flat foldable fabric material is formed into an airbag and a region of the airbag is gathered up to define a plurality of radial pleats filing out from an inflation opening. The airbag is secured to an inflator around the opening such that a plurality of studs pass through overlaid regions of the airbag in the gathered region.

DE20303303U1 discloses an airbag module for a motor vehicle with specific disclosure of a method of connection with an inflator. The inflator has a flange which is provided with downwardly projecting retention hooks which pass through respective apertures formed in the base plate of the airbag housing.

The apparatus and method of the present invention have been developed in response to the present state of the art, and in particular, in response to the problems and needs in the art that have not yet been fully solved by currently available airbag modules. Thus, it is an overall objective of the present invention to provide an airbag module and associated assembly method that remedies the shortcomings of the prior art.

Accordingly, the present invention provides an airbag module for protecting an occupant of a motor vehicle from impact, the airbag module comprising:
an inflator having a flange;
a mounting device comprising at least one retention device, wherein part of said mounting device defines a substantially planar surface, and wherein said at least one retention device extends from said planar surface and is configured to snap into engagement with said flange to secure the flange of the inflator against said planar surface of said mounting device, wherein said flange defines an outer edge and the or each retention device is configured to overlap the outer edge to grip the inflator.

Preferably, the or each said retention device is configured to flex from a natural configuration to receive the flange and subsequently moves back towards the natural configuration in response to insertion of the inflator to secure the flange against the planar surface.

Conveniently, the periphery of said flange is substantially square or rectangular.

Advantageously, the periphery of said flange is substantially circular.

Advantageously, the or each retention device comprises a clip, said clip having a shank extending from the mounting device and a head defining a retention surface generally facing said planar surface to contact the flange proximate an outer edge of the flange, wherein the shank is deformable to permit flexure of the retention device.

Conveniently, the air-bag module further comprises a plurality of said retention devices, wherein at least one of said retention devices is positioned substantially opposite another of said retention devices to permit installation of the flange generally between said retention devices.

Preferably, said retention devices are located at discreet positions around a circle.

Advantageously, the air-bag module further comprises a gas-deflector.

Conveniently, said gas-deflector has a substantially annular configuration and wherein said retention devices are formed integrally with the gas deflector.

Preferably, the air-bag module comprises an inflatable airbag, the airbag having a gas-inlet aperture for fluid communication with said inflator.

Advantageously, the airbag is provided with a respective hole configured to receive the or each clip therethrough.

Conveniently, a region of the airbag, around said inlet aperture, is clamped between said flange and said planar surface when said flange is secured against the planar surface, thereby securing the airbag in position for fluid communication with the inflator.

Preferably, said substantially planar surface is provided with at least one gripping formation configured to grip said region of the airbag.

Advantageously, the air-bag module comprises a plurality of said gripping formations in the form of ribs.

Conveniently, the mounting device comprises one or more mounting holes to facilitate installation of the device in a vehicle.

Preferably, the mounting device comprises a recess in which the inflator is mounted.

Advantageously, the or each retention device is configured to resist non-destructive removal of the inflator from the mounting device.

Conveniently, the or each said retention device is formed integrally with said mounting device.

So that the invention maybe more readily understood, and so that further features thereof may be appreciated, embodiments of the invention will now be described, by way of example, with reference to the accompanying drawings, in which:
Figure 1 is a side elevation view of an airbag module within the scope of the invention mounted as a passenger side airbag within the dashboard of a vehicle;
Figure 2 is a partially exploded perspective view from above of the mounting device and inflator of Figure 1;
Figure 3 is a perspective view, from above, of another embodiment of mounting device and inflator;
Figure 4 is a perspective view, from below, of the embodiment illustrated in Figure 3;
Figure 5 is a transverse sectional view of the embodiment illustrated in Figures 3 and 4;
Figure 6 is a partially exploded perspective view from above of another alternative arrangement of a mounting device and an inflator; and
Figure 7 is a partially exploded perspective view from above of a mounting device and an inflator according to a further arrangement.

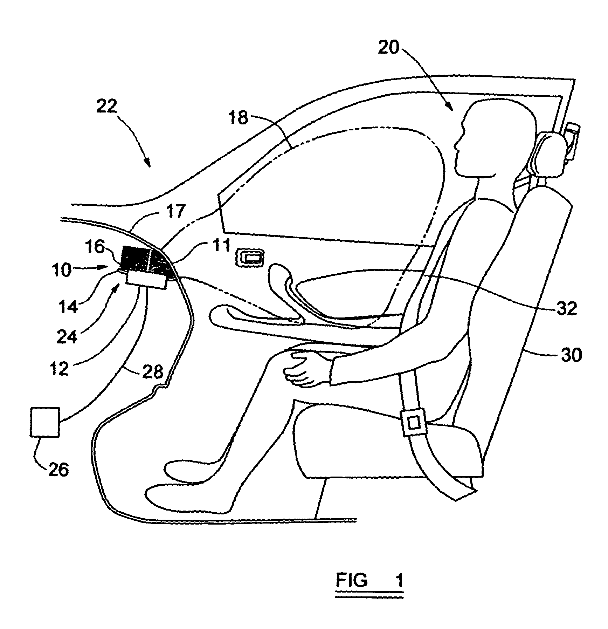

The presently preferred embodiments of the present invention will be best understood by reference to the drawings, wherein like parts are designated by like numerals throughout. It will be readily understood that the components of the present invention, as generally described and illustrated in the figures herein, could be arranged and designed in a wide variety of different configurations. Thus, the following more detailed description of the embodiments of the apparatus, system, and method of the present invention, as represented in Figures 1 through 5, is not intended to limit the scope of the invention, as claimed, but is merely representative of presently preferred embodiments of the invention.

For this application, the phrases "connected to," "coupled to," and "in communication with" refer to any form of interaction between two or more entities, including mechanical, electrical, magnetic, electromagnetic, and thermal interaction. The phrase "attached to" refers to a form of mechanical coupling that restricts relative translation or rotation between the attached objects. The phrases "pivotally attached to" and "slidably attached to" refer to forms of mechanical coupling that permit relative rotation or relative translation, respectively, while restricting other relative motion.

The phrase "attached directly to" refers to a form of attachment by which the attached items are either in direct contact, or are only separated by a single fastener, adhesive, or other attachment mechanism. The term "abutting" refers to items that are in direct physical contact with each other, although the items may not be attached together. The term "grip" refers to items that are in direct physical contact with each other, wherein one item holds the other firmly. The term "overlap" refers to items that are proximate to each other, wherein one extends over and covers a part of the other, but not necessarily in contact with each other.

Referring to Figure 1, a side elevation view shows an airbag module 10 within the scope of the invention, mounted within a passenger side airbag mounting port 11. The airbag module 10 is depicted in its fully assembled form comprising an inflator 12, a mounting device 14, and an inflatable cushion 16. The passenger side airbag mounting port 11 is disposed within a dashboard 17. The air-bag or inflatable cushion 16, when inflated 18 is of a type that protects the upper body of an occupant 20 when the vehicle 22 is involved in a front impact accident situation. However, those of skill in the art will recognise that the present invention is equally applicable to other types of airbags, such as knee bolsters, overhead airbags, inflatable curtains, inflatable structural stiffeners, and other applications where an inflator is used.

The inflator 12 and the mounting device 14 when combined are called an inflator mounting assembly 24. The inflatable cushion 16 may be mounted on the inflator mounting assembly 24 before or after the inflator mounting assembly 24 has been installed in a vehicle 22. When the air-bag 16 is assembled with the inflator mounting assembly 24, the inlet (not shown) of the air-bag 16 is positioned in fluid communication with the inflator, so as to receive gas from the inflator 12.

During installation in the vehicle 22, the inflator 12 is connected to the controller 26 by the controller connector 28. The controller 26 collects data from the crash sensors (not shown) to determine when the inflator 12 should be actuated, thereby inflating the air-bag 16. The airbag module 10, a seat 30, and a seatbelt 32 help to protect the occupant 20 from injury resulting from an impact in an accident situation.

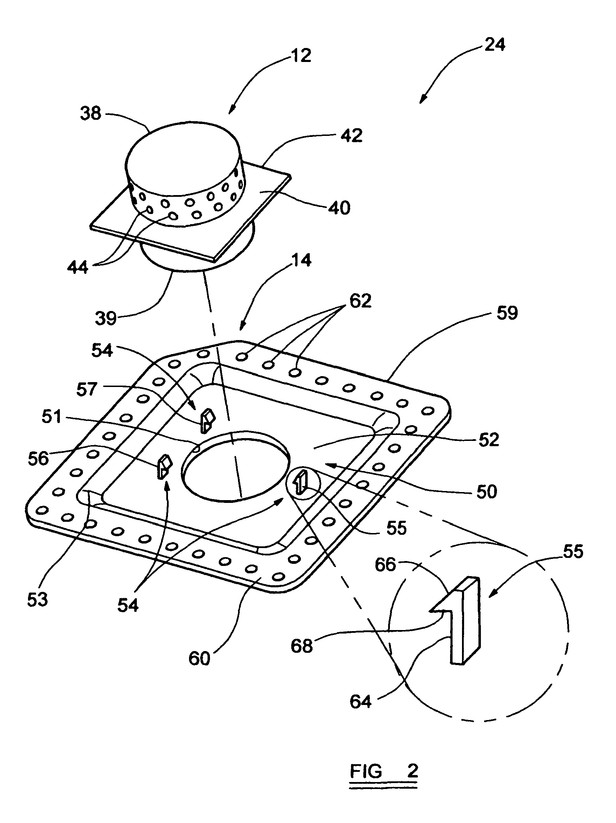

Referring to Figure 2, a perspective view illustrates the mounting device 14 and inflator 12 of Figure 1 in more detail. The inflator 12 is generally tubular and comprises a top 38, a bottom 39, and a flange 40 extending outward between the top 38 and the bottom 39 of the inflator 12. The flange 40 of Figure 2 is square, but may, in alternative embodiments, be replaced by a flange having a rounded shape, a rectangular shape or some other polygonal shape, or a combination thereof. The flange 40 has an outer edge 42. The inflator 12 has inflation gas ports 44 located around the top 38 of the inflator 12.

The mounting device 14 comprises a mounting plate 50 having a hole 51 in which the bottom 39 of the inflator 12 is inserted, and a planar surface 52 upon which the inflator 12 is held securely. The mounting plate 50 defines a substantially planar mounting surface and is disposed within a recess 53. The mounting plate 50 also comprises three integrally formed retention devices 54 extending from the surface of the mounting plate 50. The retention devices 54 can include both rigid and flexible types. The retention devices 54 in this embodiment are a first clip 55, a second clip 56, and third clip 57. The first clip 55 is disposed generally opposite the second and third clips 56, 57 on the mounting plate 50 and is separated from the second and third clips 56, 57 by a distance equivalent to the width of the flange 40 of the inflator 12. The hole 51 is disposed between the first clip 55 and the second and third clips 56, 57 on the mounting plate 50. The second and third clips 56, 57 are positioned to grip the same side of the flange and are spaced apart by a distance approximately equal to the diameter of the hole 51.

In addition to the mounting plate 50 and recess 53, the mounting device 14 comprises an outer rim 59, which is generally rectangular in shape. The outer rim 59 surrounds the periphery 60. The periphery 60 of the mounting device 14 has mounting holes 62 to facilitate mounting the airbag module 10 in the vehicle 22.

Each of the clips 55, 56, and 57 comprises two parts: a shank 64 and a head 66. The shank 64 extends from the mounting plate 50 and the head 66 is disposed at the outer end of the shank 64. The head 66 is angled and extends slightly off the shank 64, defining an upper, ramped surface which is angled downwardly from the shank, towards the hole 51. The exposed bottom surface of the head 66 defines a retention surface 68 that extends generally parallel to the planar surface 52. Each retention surface 68 grips the outer edge 42 of the flange 40 of the inflator 12 against the mounting plate 50 to securely hold the inflator 12 in place. The clips 55, 56, and 57 also prevent the inflator 12 from rotating when gripped by the mounting device 50.

The mounting device 14 and the inflator 12 are assembled by first aligning the outer edge 42 of the flange 40 of the inflator 12 with the clips 55, 56, and 57 and the bottom 39 of the inflator 12 with the hole 51 in the mounting device 14. Then the inflator 12 is pressed into the mounting plate 14, so that the edge regions of the flange 40 bear against the upper ramped surfaces of the heads 66, until the inflator 12 snaps into place against the mounting plate 50. In snapping the inflator 12 into place, the clips 55, 56 and 57 flex outward to receive the flange 40 and then return back toward their natural configurations, as the flange 40 clears the ramped surfaces of the heads 66, to grip the outer edge 42 of the flange 40 of the inflator 12. In gripping the outer edge 42, the head 66 extends over the outer edge 42 to contact the flange 40.

Note, that an outer edge of a flange may be a variety of shapes and configurations. The term "snaps" as used in this application refers to a retention device flexing from a natural configuration to receive the item in response to motion of the item and then moving back towards the natural configuration to grip the item.

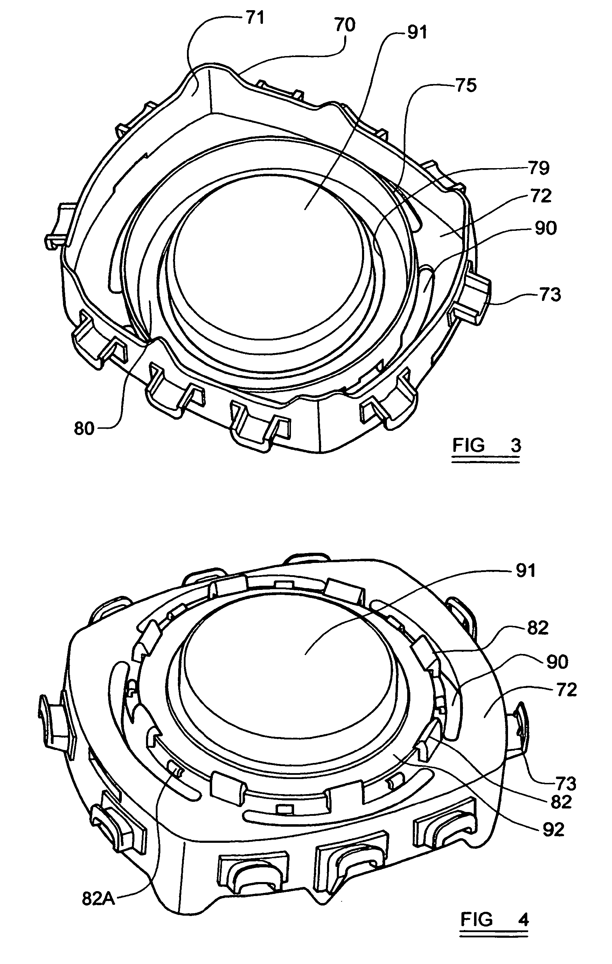

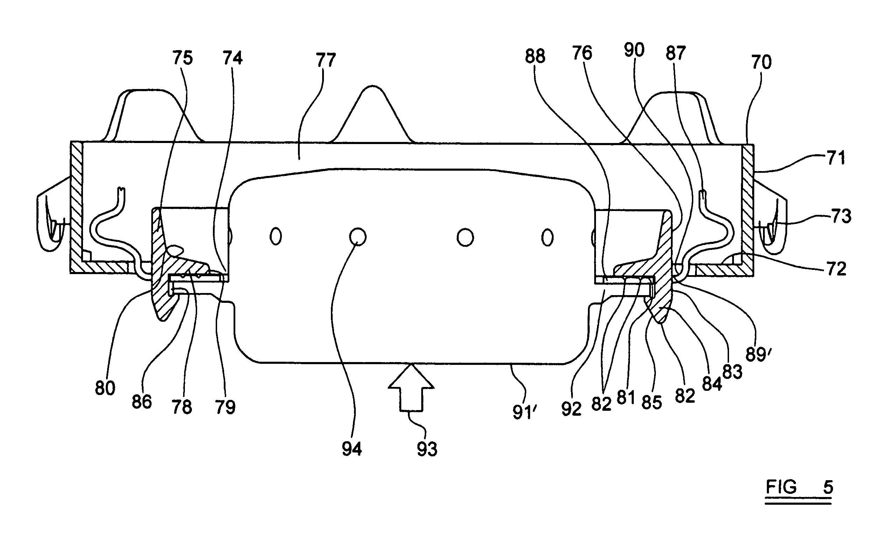

Figures 3, 4 and 5 illustrate an alternative embodiment of an air-bag module in accordance with the present invention. As will be particularly clear from Figures 3 and 5, this embodiment incorporates a mounting device 70 having a peripheral side-wall 71 and a generally planar mounting plate 72. Around the periphery of the mounting device 70, a plurality of spaced-apart mounting lugs 73 are provided for engagement with co-operating structures in a dashboard of a motor vehicle, to allow the mounting device 70 to be securely mounted in position within the dashboard.

Whilst the mounting device 70 could be fabricated from metal, the preferred embodiment has the mounting device moulded from plastics material.

A central hole 74, of generally circular configuration, is provided through the mounting plate 72 of the mounting device 70. As will become clear, the hole 74 serves a generally similar purpose as the hole 51 of the previously-described embodiment illustrated in Figure 2.

Around the periphery of the hole 74, there is provided a retention ring 75. The retention ring 75 can be fabricated from metal material, but in the preferred embodiment, the retention ring 75 is moulded from plastics material and, most preferably, is co-moulded integrally with the mounting device 70.

The retention ring 75 has an upstanding side-wall 76 which extends away from the mounting plate 72 and extends into the recess 77 defined within the mounting device 70.

The retention ring 75 also comprises a radially inwardly-directed lip 78 whose innermost circular edge 79 defines the periphery of the hole 74. The upper surface of the lip 78 and the innermost surface of the side-wall 76 merge in a generally smooth manner at a radiused corner 80.

The underside of the lip 78 defines a generally planar surface 81, but can be provided with a number of gripping formations 82. In the arrangement illustrated in Figure 5, the gripping formations 82 take the form of a pair of downwardly-depending ribs of concentric circular form, having a triangular cross-section visible in the drawing. However, it is envisaged that other forms of gripping formations could be used instead, such as, for example, a plurality of downwardly-depending pyramid or cone-shaped projections.

Extending downwardly from the retention ring 75, and formed integrally with the retention ring 75, are a plurality of substantially equi-spaced retention devices 82. As illustrated most clearly in Figure 4, the retention devices 82 are arranged at positions around the circular form of the retention ring 75.

Each retention device 82 of the arrangement illustrated in Figures 3 to 5 has a generally similar form as the retention devices of the above-described embodiment illustrated in Figure 2. It will therefore be seen that each retention device 82 takes the form of a clip comprising a shank 83 and a head 84. Each shank 83 extends downwardly from the planar mounting surface 81 defined by the lip 78 and each head 84 is positioned at the lowermost end of a respective shank 83. Each head 84 again defines a ramped surface 85 and a retention surface 86 which is spaced below, and generally parallel with, the planar surface 81 defined by the inwardly-directed lip 78.

As illustrated in Figure 4, the retention ring 75 is also provided with a plurality of substantially equi-spaced hooks 82A, arranged at positions around the circular form of the retention ring 75. Each hook 82A is positioned between a pair of neighbouring retention devices 82 and has a form generally similar to that of the retention devices 82. However, each hook 82A is smaller than the retention devices 82 and may not have a flexible shank as the retention devices 82 do. As will become clear hereinafter, the function of the hooks 82A is to secure an air-bag in position.

Figure 5 illustrates a substantially flexible inflatable air-bag 87 mounted to the air-bag module. The air-bag 87 is provided with a generally circular gas inlet opening 88 of a size generally comparable to that of the hole 74 defined by the innermost edge 79 of the lip 78. At positions spaced substantially equally from the periphery of the gas inlet aperture 88, the air-bag 87 is provided with a plurality of holes which are actually in the form of elongate slits 89, each of which is positioned radially around a nominal circle concentric with the gas inlet aperture 88. Between each pair of elongate slits 89, a small mounting hole (not illustrated) is provided through the air-bag.

Figure 5 illustrates the air-bag 87 in a position in which the peripheral region defining the gas inlet aperture 88 has been passed downwardly through a number of elongate, arcuate openings 90 which are provided around, and immediately adjacent the outermost extent of the retention ring 75, as illustrated most clearly in Figures 3 and 4. Each slot 89 provided through the fabric of the air-bag 87 is aligned with a respective retention clip 82 and the fabric of the air-bag is then pulled over the retention clips 82 so that the peripheral region of fabric defining the gas inlet aperture 88 can be positioned against the mounting surface 81 defined by the lip 78. It will be seen from Figure 5, that in this position, the retention hooks 82 each pass through a respective slot 89 provided through the air-bag 87. As the air-bag is pulled over the retention clips, the mounting holes of the air-bag each become aligned with a respective hook 82A and hence pass over the hooks 82A. The hooks 82A thus serve to retain the gas-inlet region of the air-bag in position.

Subsequently, an inflator 91, having a generally cylindrical form with an outwardly-directed mounting flange 92, is mounted to the retention ring 75. In particular, the inflator 91 is advanced towards the mounting device 71 from below, as indicated generally by the arrow 93 in Figure 5. The uppermost part of the cylindrical housing is received through the gas inlet aperture 88 formed in the air-bag 87 and through the opening 74 defined by the innermost extent of the lip 78. The inflator 91 is moved upwardly until the edge region of the mounting flange 92 bears against the ramped surfaces 85 of the retention clips 82. The retention clips 82, like the retention clips of the previously-described embodiment of Figure 1, are configured to flex outwardly as the inflator 91 is urged upwardly in order to allow the mounting flange 92 to move past the heads 84 of the retention clips 82.

Upon further advancement of the inflator 91 in an upwards direction as indicated by arrow 93, the upper surface of the mounting flange 92 bears against the undersurface of the peripheral region of the air-bag fabric which lies against the undersurface of the lip 78. It will therefore be appreciated that the mounting flange 92 clamps this peripheral region of the air-bag fabric between the uppermost surface of the flange and the undersurface of the lip 78 of the retention ring 75. The gripping formations 82 bite into the fabric of the air-bag and serve to improve the grip of this region of the air-bag between the retention ring 75 and the mounting flange 92. In this position, the heads 84 of the retention clips 82 snap back under the edge region of the mounting flange 92, in order to secure the flange against the planar surface 81 of the retention ring 75, with the peripheral region of the air-bag fabric clamped therebetween.

As will be seen from Figure 5, the upstanding side-wall 76 of the retention ring 75 extends substantially around the upper part of the inflator 91. It will therefore be appreciated that the smoothly, upwardly-sloping surface of the inner side-wall which merges with the upper surface of the lip 78 effectively defines a gas deflector which is positioned to deflect the flow of gas exiting the outlet apertures 94 of the inflator 91, so that the flow of gas does not impinge upon the regions of the air-bag fabric located closest to the outlet apertures 94 of the inflator. This gas deflector prevents disadvantageous burning of the air-bag material due to the high temperature of the gas exiting from the inflator, and also prevents damage to the air-bag in this region due to the very high pressure of the gas produced. As will be appreciated, in the preferred embodiment described, the retention devices 82 are formed integrally with the gas deflector.

In a variant of the embodiment described above with reference to Figures 3 to 5, it is envisaged that the retention ring 75, with integral retention devices 82, could be formed as a separate component from the mounting device 70, instead of being moulded integrally with it. For example, the retention ring, with retention devices, could be made from a resiliently deformable metal and be configured to snap into place on the mounting device in order to retain the inflator and air-bag in position.

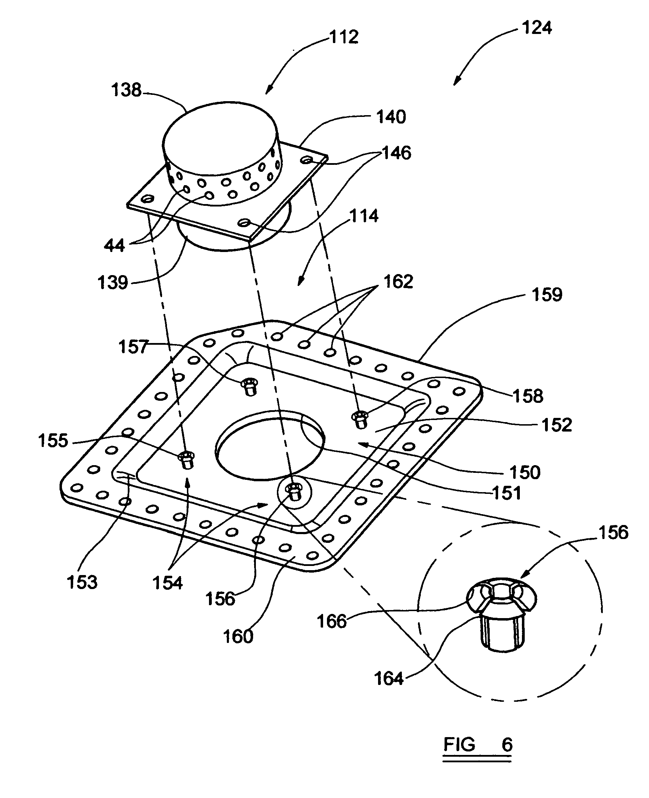

Referring to Figure 6, a perspective view illustrates an alternative arrangement of an inflator 112 and a mounting device 114 which is a variant of the arrangement described in Figure 1, but not part of the invention. The inflator 112 and the mounting device 114 may be combined to form an inflator mounting assembly 124 that may also be installed in a vehicle (not shown) similarly to the mounting assembly 24 of Figure 1. The inflator 112 comprises a top 138 and a bottom 139 with a flange 140 around the middle of the inflator. Around the top 138 are the inflation gas ports 44. The flange 140 in this arrangement is not solid but has four holes 146 formed through the flange at respective corners. Otherwise, the inflator 112 is generally similar to the inflator 12 of the embodiment of Figure 1.

The mounting device 114 comprises a mounting plate 150 with a hole 151 in the middle of the mounting plate 150 large enough to allow the bottom 139 of the inflator 112 to fit into the hole 151. The mounting plate 150 further comprises a planar surface 152. The mounting plate 150 is disposed within a recess 153 of the mounting device 114. The mounting device 114 also comprises four retention devices 154. The retention devices 154 are a first snap 155, a second snap 156, a third snap 157, and a fourth snap 158. In addition to the mounting plate 150, the mounting device 114 further comprises an outer rim 159 that is generally rectangular and a periphery 160 having a plurality of mounting holes 162.

Each of the snaps 155, 156, 157, and 158 has a shank 164 with the shape of a circle radially split into sections with a corresponding head 166 sloping away from a center of the circle. The exposed bottom surface of the head 166 is a retention surface 168. The snaps 155, 156, 157, and 158 function by flexing in the shanks 164 from a natural configuration toward the center of the circle, when the holes 146 of the flange 140 of the inflator 112 are pressed over each snap 155, 156, 157, and 158. Once the top of the flange 140 passes the heads 166 of the snaps 155, 156, 157, and 158, the shanks 166 of snaps 155, 156, 157, and 158 flex back toward the natural configuration and the retention surface 168 grips the flange 140 of the inflator 112 against the mounting plate 150.

Once the snaps 155, 156, 157, and 158 have gripped the flange 140 of the inflator 112, the snaps 155, 156, 157, and 158 resist non-destructive disassembly, which means that the inflator 112 cannot be urged from the mounting device 114 without damaging the snaps 155, 156, 157, and 158 or applying some type of additional implement to force each individual snap 155, 156, 157, and 158 to flex out of the way of the flange 140, to allow for disassembly.

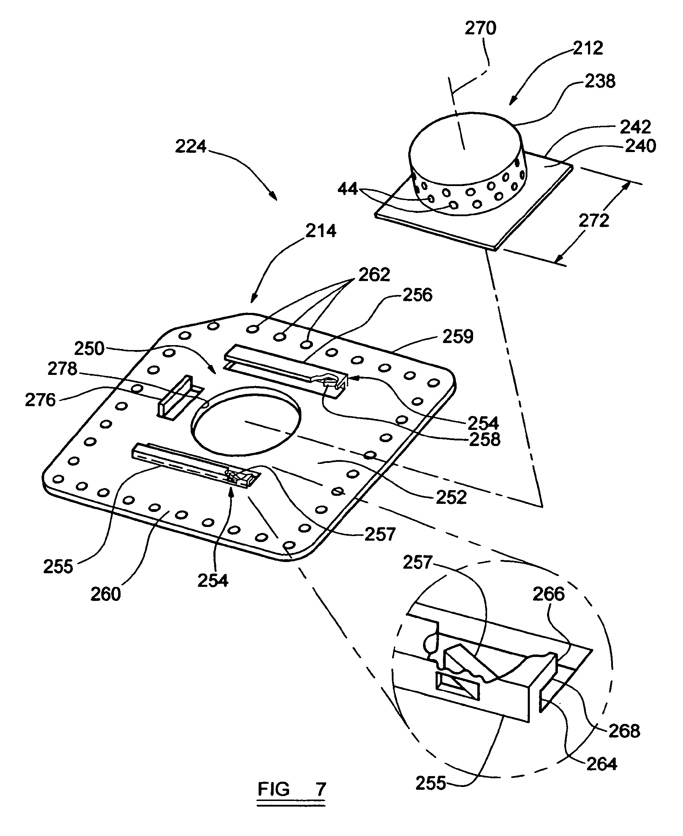

Referring to Figure 7, a perspective view illustrates an inflator 212 and a mounting device 214 according to another alternative arrangement and not part of the invention. The combination of the inflator 212 and the mounting device 214 provides an inflator mounting assembly 224. The inflator 212 is different from the other inflators 12 and 112 described above, because the inflator 212 comprises only a top 238, with inflation gas ports 44 radially disposed about the top 238, and a flange 240. The flange 240 is solid, square in shape, and comprises an outer edge 242.

The mounting device 214 comprises a mounting plate 250 having a planar surface 252. This arrangement is assembled differently than the embodiments described above. Accordingly, there is no recess in the mounting device 214 of this arrangement.

The retention devices 254 comprise a first rigid retainer 255, a second rigid retainer 256, a first retention arm 257, and a second retention arm 258. The outer rim 259 of the mounting device 214 is generally rectangular in shape. The periphery 260 is disposed just inside the outer rim 259. The periphery 259 comprises mounting holes 262 to facilitate installation of the inflator mounting assembly 224 in a vehicle and attachment of an airbag (not shown).

Each of the rigid retainers 255 and 256 comprises a retainer shank 264 in the form of an elongate wall extending upwardly from the mounting plate 214. A retainer head 266 in the form of an elongate lip extends from the outer end of the retainer shank 264, so as to lie substantially parallel to the mounting plate 214. The exposed bottom surface of the retainer head 266 is a retention surface 268 which is spaced from the mounting plate. The shanks 264 of the rigid retainers 255 and 256 are disposed opposite each other on the mounting plate 250 at a distance of approximately the width of the flange 240 of the inflator 212.

Like the inflators 12, 112 of the embodiments of figures 1 to 5, the inflator 212 may be of a type typically used in a driver's side, frontal impact airbag module. In a driver's side inflator, the height along the axis of symmetry is typically smaller than the width of the inflator. Hence, such inflators may have a disk-like shape. In the arrangement of Figure 6, this concept is illustrated with greater clarity. A height of the inflator 212 along an axis of symmetry 270 of the inflator 212 is less than a width 272 of the inflator 212. Nevertheless, inflators of many different types and shapes may be used in conjunction with the present invention.

The retention arms 257 and 258 are simple tab structures cut from the shanks 264 of the rigid retainers 255, 256 such that the retention arms 257, 258 extend inward from the shanks 264 of the rigid retainers 255 and 256. The retention arms 257 and 258 are disposed opposite each other on one end of the mounting plate 250. The retention arms 257, 258 flex from a natural configuration out of the path of the flange 240 to allow the flange 240 to slide under the retention surfaces 268 of the rigid retainers 255 and 256. Once the flange 240 slides past the retention arms 257 and 258, the retention arms 257 and 258 and flex back toward the natural configuration.

A mounting stop 276 is disposed on the opposite side of the mounting plate 250 from the retention arms 257 and 258. The mounting stop 276 prevents the flange 240 from sliding out from underneath the retention surfaces 268 of the rigid retainers 255 and 256, toward the corresponding end of the mounting device 214. The mounting stop 276 co-operates with the retention arms 257 and 258 to hold the inflator 212 securely on the mounting plate 250 in a manner that will be described subsequently.

An access hole 278 is disposed in the middle of the mounting plate 250 to provide access to the adjacent end of the inflator 212 to permit installation of electrical connectors or the like after the inflator 212 and the mounting device 214 have been assembled. The access hole 278 is disposed between the rigid retainers 255 and 256 and between the mounting stop 276 and the retention arms 257 and 258.

The inflator 212 and the mounting device 214 are assembled by sliding the flange 240 of the inflator 212 under the retention surfaces 258 of the rigid retainers 255 and 256 and past the retention arms 257 and 258, resulting in deflection the retention arms 257 and 258 to a position parallel to or nearly parallel to the shanks 264. The flange 240 of the inflator 121 is able to slide until the flange 240 contacts the mounting stop 276 and the retention arms 257 and 258 are allowed to flex back toward the natural configuration of the retention arms 257 and 258, thus blocking withdrawal of the flange 240 along the opposite direction to secure the inflator 212.

It should also be noted that different retention devices may be used with this arrangement and assembly method. For example, a nub (not shown) extending from the mounting plate 250 may have a tapered leading surface and an upright, flat trailing surface. The nub would compress to allow the flange to pass over it and under the retention surfaces 268 of the rigid retainers 255 and 256. Once the flange 240 is pressed up against the mounting stop 276, the flange 240 of the inflator 212 would seat against the flat trailing surface of the nub to prevent withdrawal of the flange. Additionally, retention arms formed in the mounting plate 250 could be used instead of retention arms 257 and 258 formed in the shanks 264 of the rigid retainers 255 and 256.

Another possible arrangement of a mounting device uses a rigid retainer on one side of a mounting plate and snaps or clips on the opposite side of the mounting plate. The flange of the inflator is then slid at an angle between the retention surface of the rigid retainer and the mounting plate. The flange is then rotated toward the mounting plate until the flange engages the snaps or clips on the opposite side of the mounting plate to securely hold the inflator against the mounting device.

A further arrangement of a mounting device and inflator may include a mounting device wherein the retention devices comprise a rigid retention device and a nub. The rigid retention device in this arrangement has a shank and a head, wherein the shank extends from a mounting plate positioned on one side of an access hole in the mounting device. The head of the rigid retainer extends out over the mounting plate. The nub is disposed on the other side of the access hole opposite the rigid retention device on the mounting plate.

The inflator does not have flange but instead comprises a hole in the base of inflator that is shaped like the head of the rigid retainer and a recess that matches the size of the nub. The hole in the base of the inflator opens to a cavern extending in an arc within the base. The inflator is assembled with the mounting device by inserting the rigid retainer into the hole in the base and rotating the inflator. Rotating the inflator turns the head of the rigid retainer into the cavern, which places part of the inflator between the head and the mounting plate. The inflator is rotated until the nub is seated within the recess in the base of the inflator.

A separate arrangement of a mounting device and inflator comprises an inflator without a flange and a mounting device. The inflator has four recesses evenly spaced about the inflator, wherein each recess has a surface that is closest to a mounting plate of the mounting device when the inflator is mounted recesses, wherein the surface is parallel with or angled toward the middle of the inflator and the mounting plate. The mounting device comprises four retention devices each having a shank, wherein each shank has a length that is similar to the distance of the base to an outside lip of the surfaces of the recesses. The retention device also comprises an angled head extending from the shank over the mounting plate. The retention devices are disposed about the mounting plate so as to engage respective recesses in the inflator.

The inflator is actuated toward the mounting plate and engages the heads of the retention devices. As the inflator is urged toward the mounting plate the shanks flex away from the inflator, allowing the inflator to move past the heads. As the inflator contacts the mounting plate, the retention devices flex back toward their natural configuration. The heads enter the recesses to secure the inflator against the inflator.

Retention devices that are not integrally formed with the mounting plate may also be used with this method and apparatus. For example, separately formed clips having a head on either end of a shank could be snapped onto a flange of an inflator and onto a mounting plate of a mounting device. Similarly, a snap may have multiple shanks and heads at both ends of the shanks. Such a snap could be snapped into a hole in the flange of an inflator and into a hole in the mounting plate.

It should also be noted that the mounting device may be any shape. For example, the mounting device could be a square, an oval, or a circle. Additionally, the mounting plate may incorporate rubber seals to prevent the inflation gas from leaking between a mounting plate and an inflator, or between a mounting plate and a plenum chamber or other surrounding structure.

A mounting device with integral retention devices may be manufactured in a variety of ways, including stamping, machining, welding, casting, and injection moulding. In addition, the mounting device may be made from other materials including various metals, metal alloys, composites, and plastics.

Stamping provides excellent material characteristics in grain structure and work hardening of a metal mounting device. However, metal mounting device may need to be annealed to relieve the internal stresses in the, in order for the retention devices to function properly.

An exemplary stamping process may first stamp a blank of the mounting device. Second, mounting holes may be formed in the blank. Third, a recess and mounting plate is formed in the mounting device. Fourth, the retention devices may be outlined and the heads of the retention devices shaped. Fifth, the heads are bent into position. Sixth, the shanks are bent up from the mounting plate completing the mounting device. Of course, steps may be combined or other steps added to form other features in the mounting device, such as additional holes, retention devices, or a mounting stop.

Investment casting and injection moulding may also be used to form a mounting device. Injection moulding of the mounting device may be used to make plastic and composite mounting devices. An injection moulding apparatus may use a three-part old comprising a back part and two front halves. The back would provide the detail for the bottom of the mounting device, mounting holes, access hole, and outer rim. The two front halves may move over the top of the back to close the old. By moving over the top of the back part, clips or rigid retainers may be formed on the mounting plate in alignment with the movement of the old. Other features may be added through further machining of the moulded mounting device.

If a wax mounting device is formed by the injection moulding process, the wax mounting device may then be subsequently used in an investment casting process. The wax mounting device is first repeatedly dipped in a ceramic slurry to build up a old exterior. Once the mould exterior is adequately thick, the mould is placed in an oven to melt and remove the wax mounting device. Next, the mould may be filled with molten metal alloy and allowed to cool. Once cool, the mould is then broken away from the metal mounting device. Other features may then be added through further machining of the moulded mounting device.

The inflator mounting assemblies illustrated in the accompanying drawings are simply examples. The inflator design and module requirements may necessitate a wide variety of changes to the embodiments shown. Many other inflation assemblies may be created within the scope of the present invention by combining, isolating, or otherwise modifying the features depicted in the figures.

The present invention may be embodied in other specific forms without departing from its structures, methods, or other essential characteristics as broadly described herein and claimed hereinafter. The described embodiments are to be considered in all respects only as illustrative, and not restrictive. The scope of the invention is, therefore, indicated by the appended claims, rather than by the foregoing description.

## Claims

1. An airbag module (10) for protecting an occupant of a motor vehicle from impact, the airbag module comprising:
an inflator (12) having a flange (40) defining an outer edge (42);
a mounting device (14) comprising at least one retention device (54), wherein part of said mounting device defines a substantially planar surface (52), and wherein said at least one retention device extends from said planar surface and is configured to snap into engagement with said flange to secure the flange of the inflator against said planar surface of said mounting device, **characterised in that** the or each retention device (54) is configured to overlap the outer edge (42) to grip the inflator.

2. An airbag module according to claim 1, wherein the or each said retention device is configured to flex from a natural configuration to receive the flange and subsequently moves back towards the natural configuration in response to insertion of the inflator to secure the flange against the planar surface.

3. An airbag module according to claim 1 or 2, wherein the periphery of said flange is substantially square or rectangular.

4. An airbag module according to claim 1 or 2, wherein the periphery of said flange is substantially circular.

5. An airbag module according to any preceding claim, wherein the or each retention device comprises a clip, said clip having a shank extending from the mounting device and a head defining a retention surface generally facing said planar surface to contact the flange proximate an outer edge of the flange, wherein the shank is deformable to permit flexure of the retention device.

6. An airbag module according to any preceding claim, comprising a plurality of said retention devices, wherein at least one of said retention devices is positioned substantially opposite another of said retention devices to permit installation of the flange generally between said retention devices.

7. An airbag module according to claim 6 as dependant upon claim 4, wherein said retention devices are located at discreet positions around a circle.

8. An airbag module according to any preceding claim, further comprising a gas-deflector.

9. An airbag module according to claim 8, as dependant upon claim 7, wherein said gas-deflector has a substantially annular configuration and wherein said retention devices are formed integrally with the gas deflector.

10. An airbag module according to any preceding claim, further comprising an inflatable airbag, the airbag having a gas-inlet aperture for fluid communication with said inflator.

11. An airbag module according to claim 10, as dependant upon any one of claims 5 to 7, wherein the airbag is provided with a respective hole configured to receive the or each clip therethrough.

12. An airbag module according to claim 10 or 11, wherein a region of the airbag, around said inlet aperture, is clamped between said flange and said planar surface when said flange is secured against the planar surface, thereby securing the airbag in position for fluid communication with the inflator.

13. An airbag module according to claim 12, wherein said substantially planar surface is provided with at least one gripping formation configured to grip said region of the airbag.

14. An airbag module according to claim 13, comprising a plurality of said gripping formations in the form of ribs.

15. An airbag module according to any preceding claim, wherein the mounting device comprises one or more mounting holes to facilitate installation of the device in a vehicle.

16. An airbag module according to any preceding claim, wherein the mounting device comprises a recess in which the inflator is mounted.

17. An airbag module according to any preceding claim, wherein the or each retention device is configured to resist non-destructive removal of the inflator from the mounting device.

18. An airbag module according to any preceding claim, wherein the or each said retention device is formed integrally with said mounting device.

## Patentansprüche

1. Airbagmodul (10) für den Schutz eines Insassen eines Kraftfahrzeugs vor einem Aufprall, wobei das Airbagmodul umfaßt:
eine Aufblasvorrichtung (12), die mit einem Flansch (40) versehen ist, der eine äußere Kante (42) bildet;
eine Befestigungsvorrichtung (14), die zumindest eine Haltevorrichtung (54) aufweist, wobei ein Teil der genannten Befestigungsvorrichtung eine im wesentlichen ebene Oberfläche (52) bildet, und wobei die genannte zumindest eine Haltevorrichtung sich von der genannten ebenen Oberfläche erstreckt und konfiguriert ist, in Zusammenwirken mit dem genannten Flansch einzurasten, um den Flansch der Aufblasvorrichtung gegen die genannte ebene Oberfläche der genannten Befestigungsvorrichtung zu halten, **dadurch gekennzeichnet, daß** die oder jede Haltevorrichtung (54) konfiguriert ist, um die äußere Kante (42) zu überlappen, um die Aufblasvorrichtung zu erfassen.

2. Airbagmodul nach Anspruch 1, **dadurch gekennzeichnet, daß** die oder jede genannte Haltevorrichtung konfiguriert ist, um sich aus einer ursprünglichen Konfiguration durchzubiegen, um den Flansch aufzunehmen, und sich dann zurück in Richtung auf die ursprüngliche Konfiguration bewegt, ansprechend auf das Einsetzen der Aufblasvorrichtung, um den Flansch gegen die ebene Oberfläche zu halten.

3. Airbagmodul nach Anspruch 1 oder 2, **dadurch gekennzeichnet, daß** der Umfang des genannten Flanschs im wesentlichen quadratisch oder rechteckig ist.

4. Airbagmodul nach Anspruch 1 oder 2, **dadurch gekennzeichnet, daß** der Umfang des genannten Flanschs im wesentlichen kreisförmig ist.

5. Airbagmodul nach einem der vorangehenden Ansprüche, **dadurch gekennzeichnet, daß** die oder jede Haltevorrichtung einen Clip aufweist, wobei der genannte Clip einen Schaft aufweist, der sich von der Befestigungsvorrichtung erstreckt, und einen Kopf, der eine Haltefläche bildet, die im wesentlichen zu der genannten ebenen Oberfläche weist, um mit dem Flansch in der Nähe einer äußeren Kante des Flanschs in Kontakt zu kommen, wobei der Schaft verformbar ist, um ein Durchbiegen der Haltevorrichtung zu ermöglichen.

6. Airbagmodul nach einem der vorangehenden Ansprüche, umfassend eine Anzahl der genannten Haltevorrichtungen, wobei zumindest eine der genannten Haltevorrichtungen im wesentlichen gegenüber einer anderen der genannten Haltevorrichtungen positioniert ist, um den Einbau des Flanschs im wesentlichen zwischen den genannten Haltevorrichtungen zu ermöglichen.

7. Airbagmodul nach Anspruch 6, soweit auf Anspruch 4 rückbezogen, **dadurch gekennzeichnet, daß** die genannten Haltevorrichtungen an getrennten Positionen um einen Kreis herum angeordnet sind.

8. Airbagmodul nach einem der vorangehenden Ansprüche, weiter umfassend eine Gasablenkvorrichtung.

9. Airbagmodul nach Anspruch 8, soweit auf Anspruch 7 rückbezogen, **dadurch gekennzeichnet, daß** die genannte Gasablenkvorrichtung eine im wesentlichen ringförmige Konfiguration aufweist, und wobei die genannten Haltevorrichtungen integral mit der Gasablenkvorrichtung ausgebildet sind.

10. Airbagmodul nach einem der vorangehenden Ansprüche, weiter umfassend einen aufblasbaren Airbag, wobei der Airbag eine Gaseinlaßöffnung für eine Strömungsverbindung mit der genannten Aufblasvorrichtung aufweist.

11. Airbagmodul nach Anspruch 10, soweit rückbezogen auf einen der Ansprüche 5 bis 7, **dadurch gekennzeichnet, daß** der Airbag mit einem entsprechenden Loch versehen ist, welches konfiguriert ist, um den oder jeden Clip durch dieses hindurch aufzunehmen.

12. Airbagmodul nach Anspruch 10 oder 11, **dadurch gekennzeichnet, daß** ein Bereich des Airbags um die genannte Einlaßöffnung herum zwischen dem genannten Flansch und der genannten ebenen Oberfläche eingeklemmt ist, wenn der Flansch gegen die ebene Oberfläche gehalten ist, so daß auf diese Weise der Airbag in seiner Position für eine Strömungsverbindung mit der Aufblasvorrichtung gehalten ist.

13. Airbagmodul nach Anspruch 12, **dadurch gekennzeichnet, daß** die im wesentlichen ebene Oberfläche mit zumindest einer Greifausformung versehen ist, die konfiguriert ist, um den genannten Bereich des Airbags zu greifen.

14. Airbagmodul nach Anspruch 13, umfassend eine Anzahl der genannten Greifausformungen in Form von Rippen.

15. Airbagmodul nach einem der vorangehenden Ansprüche, **dadurch gekennzeichnet, daß** die Befestigungsvorrichtung ein oder mehrere Befestigungslöcher aufweist, um den Einbau der Vorrichtung in einem Fahrzeug zu erleichtern.

16. Airbagmodul nach einem der vorangehenden Ansprüche, **dadurch gekennzeichnet, daß** die Befestigungsvorrichtung eine Aussparung aufweist, in der die Aufblasvorrichtung gehalten ist.

17. Airbagmodul nach einem der vorangehenden Ansprüche, **dadurch gekennzeichnet, daß** die oder jede Haltevorrichtung so konfiguriert ist, daß sie einer zerstörungsfreien Abnahme der Aufblasvorrichtung von der Befestigungsvorrichtung widersteht.

18. Airbagmodul nach einem der vorangehenden Ansprüche, **dadurch gekennzeichnet, daß** die oder jede Haltevorrichtung integral mit der genannten Befestigungsvorrichtung ausgebildet ist.

## Revendications

1. Module de coussin gonflable (10) pour protéger un occupant d'un véhicule à moteur d'un choc, le module de coussin gonflable comprenant :
un gonfleur (12) ayant une bride (40) définissant un bord externe (42) ;
un dispositif de montage (14) comprenant au moins un dispositif de maintien (54), dans lequel une partie dudit dispositif de montage définit une surface sensiblement plane (52), et dans lequel ledit dispositif de maintien s'étend à partir de ladite surface plane et est configuré pour s'encliqueter en engagement avec ladite bride pour fixer la bride du gonfleur contre ladite surface plane dudit dispositif de montage,
**caractérisé en ce que** le ou chaque dispositif de maintien (54) est configuré pour chevaucher le bord externe (42) pour saisir le gonfleur.

2. Module de coussin gonflable selon la revendication 1, dans lequel le ou chaque dispositif de maintien est configuré pour fléchir à partir d'une configuration naturelle pour recevoir la bride et revient par la suite vers la configuration naturelle en réponse à l'introduction du gonfleur pour immobiliser la bride contre la surface plane.

3. Module de coussin gonflable selon la revendication 1 ou 2, dans lequel la périphérie de ladite bride est sensiblement carrée ou rectangulaire.

4. Module de coussin gonflable selon la revendication 1 ou 2, dans lequel la périphérie de ladite bride est sensiblement circulaire.

5. Module de coussin gonflable selon une quelconque revendication précédente, dans lequel le ou chaque dispositif de maintien comprend une attache, ladite attache ayant un corps s'étendant du dispositif de montage et une tête définissant une surface de maintien faisant face généralement à ladite surface plane pour le contact de la bride à proximité d'un bord externe de la bride, le corps étant déformable pour permettre la flexion du dispositif de maintien.

6. Module de coussin gonflable selon une quelconque revendication précédente, comprenant une pluralité desdits dispositifs de maintien, dans lequel au moins l'un desdits dispositifs de maintien est disposé sensiblement en opposition d'un autre desdits dispositifs de maintien pour permettre l'installation de la bride généralement entre lesdits dispositifs de maintien.

7. Module de coussin gonflable selon la revendication 6, quand elle dépend de la revendication 4, dans lequel lesdits dispositifs de maintien sont situés en des positions discrètes autour d'un cercle.

8. Module de coussin gonflable selon une quelconque revendication précédente, comprenant de plus un déflecteur de gaz.

9. Module de coussin gonflable selon la revendication 8. quand elle dépend de la revendication 7, dans lequel ledit déflecteur de gaz a une configuration sensiblement annulaire et dans lequel lesdits dispositifs de maintien sont intégralement formés avec le déflecteur de gaz.

10. Module de coussin gonflable selon une quelconque revendication précédente, comprenant de plus un coussin gonflable, le coussin ayant une ouverture d'entrée de gaz pour la communication fluidique avec ledit gonfleur.

11. Module de coussin gonflable selon la revendication 10, quand elle dépend d'une quelconque des revendications 5 à 7, dans lequel le coussin gonflable est muni d'un trou respectif configuré pour recevoir l'attache ou chaque attache à travers lui.

12. Module de coussin gonflable selon la revendication 10 ou 11, dans lequel une zone du coussin gonflable, autour de ladite ouverture d'entrée, est serrée entre ladite bride et ladite surface plane quand ladite bride est immobilisée contre la surface plane, en immobilisant ainsi le coussin gonflable en position pour la communication fluidique avec le gonfleur.

13. Module de coussin gonflable selon la revendication 12, dans lequel ladite surface sensiblement plane est munie d'au moins une réalisation de préhension configurée pour saisir ladite zone du coussin gonflable.

14. Module de coussin gonflable selon la revendication 13, comprenant une pluralité desdites réalisations de préhension sous la forme de nervures.

15. Module de coussin gonflable selon une quelconque revendication précédente, dans lequel le dispositif de montage comprend un ou plusieurs trous de montage pour faciliter l'installation du dispositif dans un véhicule.

16. Module de coussin gonflable selon une quelconque revendication précédente, dans lequel le dispositif de montage comprend un évidement dans lequel le gonfleur est monté.

17. Module de coussin gonflable selon une quelconque revendication précédente, dans lequel le ou chaque dispositif de maintien est configuré pour résister à un retrait non destructif du gonfleur depuis le dispositif de montage.

18. Module de coussin gonflable selon une quelconque revendication précédente, dans lequel le ou chaque dispositif de maintien est intégralement formé avec ledit dispositif de montage.
